# EUROPEAN PATENT SPECIFICATION

(11) **EP 4 141 277 B1**
(45) Date of publication and mention of the grant of the patent: **11.09.2024**
(21) Application number: 21192797.5
(22) Date of filing: 24.08.2021
(51) Int. Cl.: F16C 19/46, F16C 19/50, F16C 33/46, F16C 33/58, F16D 55/226, F16D 65/18, F16C 33/51

(54) **HALF SHELL BEARING, DISC BRAKE COMPRISING A RESPECTIVE HALF SHELL BEARING AND UTILITY VEHICLE COMPRISING A RESPECTIVE DISC BRAKE**
HALBSCHALENLAGER, SCHEIBENBREMSE MIT EINEM ENTSPRECHENDEN HALBSCHALENLAGER UND NUTZFAHRZEUG MIT EINER ENTSPRECHENDEN SCHEIBENBREMSE
PALIER DEMI-COQUE, FREIN À DISQUE COMPRENANT UN PALIER DEMI-COQUE CORRESPONDANT ET VÉHICULE UTILITAIRE COMPRENANT UN FREIN À DISQUE CORRESPONDANT

(43) Date of publication of application: 01.03.2023
(73) Proprietor: ZF CV Systems Europe BV, 1170 Brussels (BE)
(72) Inventor: Strzala, Wieslaw, 46-220 Byczyna (PL)
(74) Representative: Ohlendorf, Henrike

(56) References cited:
- EP-A1- 3 742 017
- DE-A1- 10 309 051
- DE-A1- 102016 103 856
- DE-U1- 8 710 514
- US-A1- 2005 045 434

## Description

The invention relates to a half shell bearing comprising a bearing shell and a bearing cage with cylindrical rolling elements, wherein the bearing cage is movably arranged on a rolling path of the bearing shell. The invention further relates to a disc brake comprising a respective half shell bearing and to a utility vehicle comprising such a disc brake.

Disc brakes, in particular air disc brakes, are widely used in brake systems of utility vehicles, for example in heavy trucks, buses and trailers. An air disc brake comprises as essential parts a brake anchor plate, a brake caliper with a clamping unit, a brake cylinder and brake pads. The brake cylinder is fitted onto the brake caliper and is operated using compressed air provided by a compressed-air supply container, which is filled by a compressor. In case of a braking action, the brake cylinder provides via a lever an axial movement of a yoke and a push rod of the clamping unit, via which the brake pads are pushed to a brake disc, which is mounted onto an axle of a utility vehicle, to create friction.

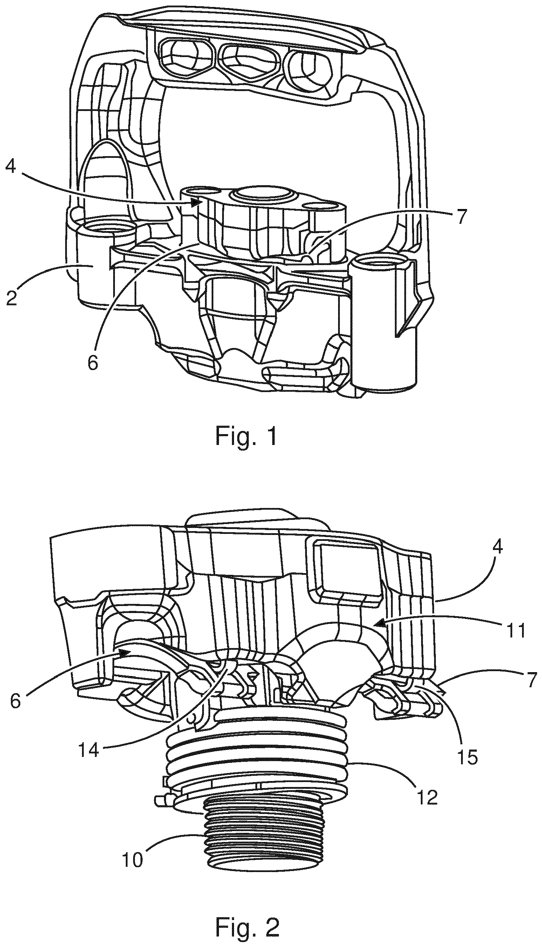

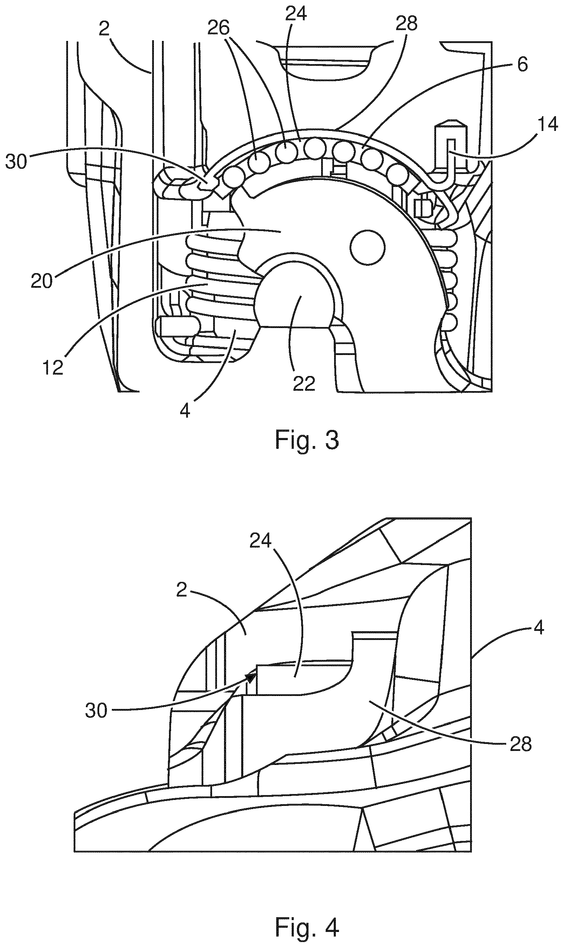

Fig. 1 illustrates a brake caliper 2 including a clamping unit 4 of an air disc brake, as used for utility vehicles. The brake caliper 2 is arranged on guide pins of a brake anchor plate, not shown in Fig. 1, which allows for an axial movement of the brake caliper 2 relative to the brake anchor plate in case of a braking action. To allow a smooth movement of the clamping unit 4 within the brake caliper 2, two half shell bearings 6, 7 are arranged between a lever 20, shown in Fig. 3, and the clamping unit 4.

Fig. 2 shows the clamping unit 4 during assembly into the brake caliper 2 of the air disc brake. The clamping unit 4 includes a push rod 10, a yoke 11 and an adjuster unit 12, which are shifted by the lever 20 during a braking action to press brake pads, which are arranged on a brake anchor plate of the air disc brake, onto a brake disc. The half shell bearings 6, 7 comprise a fixing means 14, respectively 15, via which the half shell bearings 6, 7 are securely mounted on the clamping unit 4.

Fig. 3 schematically depicts a cross section of the brake caliper 2 with the clamping unit 4 of Fig. 2. The lever 20 is rotatable around a pivot axis 22. The half shell bearing 6, correspondingly also the half shell bearing 7, are arranged between the clamping unit 4 and the lever 20. The half shell bearing 6 comprises a bearing cage 24, in which needle rollers 26 are inserted, and a bearing shell 28. The bearing cage 24 is movably positioned within the bearing shell 28. This can cause a problem during assembly of the brake caliper 2, when the half shell bearing 6 is inserted into the brake caliper 2, because the bearing cage 24 may collide with the lever 20 during insertion, at a location 30, and then the half shell bearing 6 is not positioned correctly within the brake caliper 2.

Fig. 4. shows a correct position of the bearing cage 24, but as in this position the bearing cage 24 is close to the brake caliper 2 during an assembly, the bearing cage 24 can hit an edge of the brake caliper 2, which can move the bearing cage 24 into a not correct position.

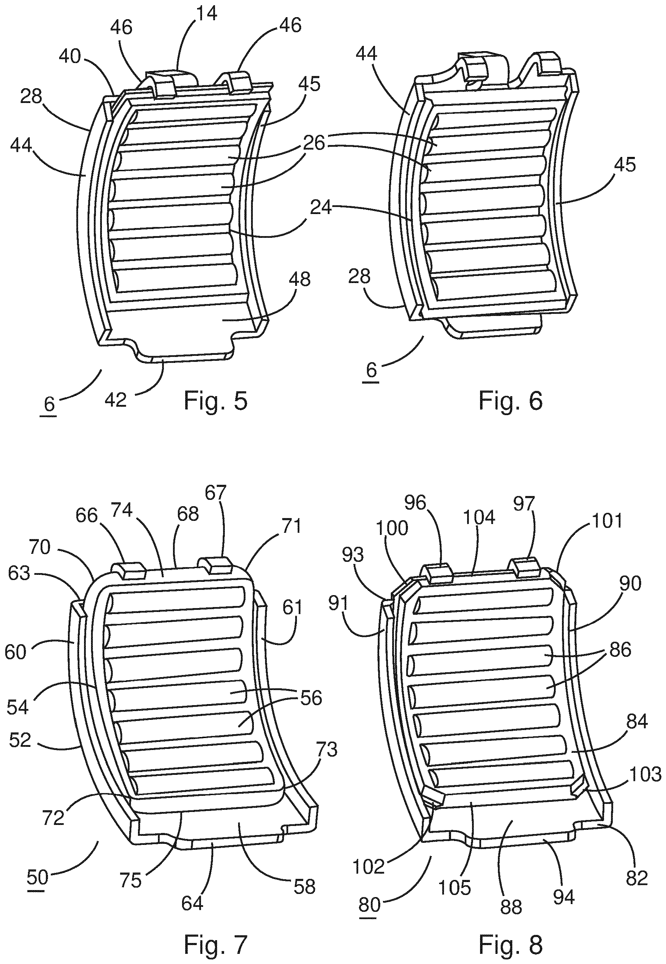

Fig. 5 shows in a front view the half shell bearing 6 being used within the brake caliper 2 and as described with regard to Figs. 3 and 4. The half shell bearing 6 includes the bearing shell 28 and the bearing cage 24, in which the needle rollers 26 are arranged as rolling elements. The bearing cage 24 is movable in one direction on a rolling path 48 between a first end 40 and a second, opposite end 42 of the bearing shell 28 because of limiting walls 44, 45 of the bearing shell 28, and because of the needle rollers 26, which force a moving direction for the bearing cage 24 in a direction perpendicular to a rotation axis of the needle rollers 26.

The half shell bearing 6 is also known as a needle roller bearing. The needle rollers 26 are used to reduce friction of a rotating surface. The rolling path 48 is also known as a race or a raceway and represents an outer race of the half shell bearing 6.

At the first end 40 of the bearing shell 28, a retaining means 46 is provided at the bearing shell 28 to restrict the movement of the bearing cage 24 within the bearing shell 28 in the direction of the first end 40. The second end 42 of the bearing shell 28 is open and does not restrict the movement of the bearing cage 24. The fixing means 14 is arranged at a back side of the bearing shell 28 for mounting the half shell bearing 6 on the brake caliper 2. The half shell bearing 7 is constructed in a similar manner as the half shell bearing 6.

When the half shell bearing 6 is assembled at the brake caliper 2, the bearing cage 24 has to be in a position within the bearing shell 28 as depicted in Fig. 5. When the bearing cage 24 is in a position within the bearing shell 28 as depicted in Fig. 6, the half shell bearing 6 may not be correctly positioned at the brake caliper 2, as described before with regard to Figs. 3 and 4.

In a state of the art design, during the assembly of the clamping unit 4 together with the half shell bearing 6 into the brake caliper 2, and when the bearing cage 24 is in position like on Fig.5 to not collide with the lever 20, but also in this position, an edge of the bearing cage 24 can hit the brake caliper 2. The bearing cage 24 can, therefore, move in the direction of the second end 42 and collide with the lever 20 during assembly, as the brake caliper 2 is close to the bearing cage 24.

A disc brake comprising a brake anchor plate and a brake caliper with a clamping unit is disclosed in US 2005/0045434 A1. The clamping unit comprises a lever, which can be actuated by a brake cylinder via a piston. A half shell needle bearing is inserted between a cam of the lever and a brake actuation mechanism of the clamping unit, via which brake pads are pushed onto a brake disc in case of a braking action.

EP 0 824 639 B2, corresponding with WO 96/34216 A1, discloses a disc brake comprising a brake anchor plate and a brake caliper with a clamping unit, which includes a half shell bearing.

DE 10 2016 214645 A1 discloses a half shell bearing comprising a bearing shell and a bearing cage according to the preamble of claim 1.

DE 10 2016 103 856 A1 discloses a half shell bearing comprising a bearing shell, on which a partially cylindrically curved rolling path is formed, and a bearing cage with needle rollers as rolling elements. The bearing shell is provided with at least one retaining means, which extends into an opening of the bearing cage, to reduce an unwanted falling apart of the bearing shell and the bearing cage, and thus of the half shell bearing during assembly within a brake caliper of a disc brake.

DE 10 2013 211 447 A1 discloses a half shell bearing comprising a bearing shell, on which a partially cylindrically curved rolling path is formed, and a bearing cage with needle rollers as rolling elements, wherein the bearing shell comprises a retaining means for releasably fixing the bearing cage in a transport position. This has the advantage that a damage of the half shell bearing during transport and mounting of the half shell bearing is reduced.

DE10 309 051 A1 and DE 87 105 14 U discloses a half shell bearing wherein two corners of the bearing cage are rounded.

It is an object of the present invention to provide an improved half shell bearing that allows a safe mounting of the half shell bearing within a brake caliper of a disc brake.

The invention is as set out in the independent claims 1, 12 and 14. Preferred embodiments are defined by the dependent claims.

The half shell bearing comprises a bearing shell and a bearing cage, wherein the bearing shell comprises a surface being designed as a rolling path for the bearing cage. The bearing shell further comprises two shell walls on opposite sides of the bearing shell, a third side with a retaining means for limiting a movement of the bearing cage, and a fourth side opposite to the third side. The bearing cage comprises cylindrical rolling elements that roll on the rolling path, wherein the bearing cage is movably accommodated on the rolling path within the shell walls of the bearing shell, and the bearing cage comprises two corners being directed to the third side of the bearing shell, wherein the two corners of the bearing cage are chamfered.

In a preferred embodiment, the rolling path of the bearing shell is constructed as a partially cylindrically curved surface.

In another preferred embodiment, the rolling elements are cylindrical rolling elements, for example needle elements, having a diameter and a length, wherein the diameter is small relative to the length.

In another preferred embodiment, the two shell walls of the bearing shell are designed to limit the movement of the bearing cage.

In another preferred embodiment, the bearing cage has a rectangular form with four corners, wherein all four corners are chamfered.

In another preferred embodiment, the bearing cage comprises an outer rolling element being located at an end of the bearing cage being directed to the third side of the bearing shell, an outer rolling element being located at an end of the bearing cage being directed to the fourth side of the bearing shell and inner rolling elements, wherein the outer rolling element being located at the end of the bearing cage being directed to the third side has a length, which is shorter than the length of the inner rolling elements.

In another preferred embodiment, the bearing cage comprises an outer rolling element being located at an end of the bearing cage being directed to the third side of the bearing shell, an outer rolling element being located at an end of the bearing cage being directed to the fourth side of the bearing shell and inner rolling elements, wherein both outer rolling elements have a length, which is shorter than the length of the inner rolling elements.

In another preferred embodiment, the fourth side of the bearing shell comprises an open end, which is not limiting a movement of the bearing cage.

In another preferred embodiment, the bearing shell comprises a fixing means for mounting the half shell bearing at a brake calliper of a disc brake.

The invention further defines a disc brake comprising a brake calliper with a clamping unit and a respective half shell bearing. The disc brake is in particular an air operated or electromechanically operated sliding calliper disc brake.

The disc brake is advantageously used within a compressed air brake system of a utility vehicle.

Preferred embodiments of the disclosure are explained in more detail below by way of example with reference to schematic drawings, which show:
- Fig. 1: a brake caliper of an air disc brake according to the prior art;
- Fig. 2: a clamping unit of the brake caliper of Fig. 1;
- Fig. 3: an arrangement of a half shell bearing within the brake caliper of Fig. 1 in a cross section, wherein a bearing cage of the half shell bearing is not in a correct position;
- Fig. 4: a detail view of the brake caliper of Fig. 1, wherein the bearing cage is in a correct position but is very close to the brake caliper;
- Fig. 5: a half shell bearing comprising a bearing shell and a bearing cage according to the prior art;
- Fig. 6: the half shell bearing of Fig. 5, wherein the bearing cage is in a wrong position when assembling the half shell bearing in the brake caliper of Fig. 1;
- Fig. 7: a half shell bearing according to the prior art,
- Fig. 8: a embodiment of a half shell bearing according to the present invention;
- Fig. 9: a detail of a brake caliper after insertion of the half shell bearing of Fig. 7;
- Fig. 10: a third embodiment of a half shell bearing according to the present invention; and
- Fig. 11: a detail of the brake caliper of Fig. 9 after insertion of the half shell bearing of Fig. 10.

The present description illustrates the principles of the present invention. It will thus be appreciated that those skilled in the art will be able to devise various arrangements that, although not explicitly described or shown herein, embody the principles of the invention and are included within its scope.

All examples and conditional language recited herein are intended for instructional purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof.

Fig. 7 depicts a half shell bearing 50 according to the prior art, comprising a bearing shell 52 and a bearing cage 54. The bearing cage 54 includes cylindrical rolling elements 56, in particular needle rollers as the rolling elements 56, to allow a movement of the bearing cage 54 on a surface of the bearing shell 52, which is designed as a rolling path 58 for the bearing cage 54. The bearing shell 52 comprises limiting shell walls 60 and 61 on opposite sides of the bearing shell 52, to restrict the movement of the bearing cage 54 on the rolling path 58 to one dimension, in a direction perpendicular to a rotation axis of the rolling elements 56. The bearing shell 52 and a bearing cage 54 are cylindrically curved and the rolling path 58 is formed in particular as a partially cylindrically curved rolling path on the bearing shell 52. The cylindrical rolling elements 56 constitute bearing elements that are small in diameter relative to their length.

At a third side 63 of the bearing shell 52, two hooks are arranged as a retaining means 66, 67. The retaining means 66, 67 provide an end of the rolling path 58, for restricting a movement of the bearing cage 54 in the direction of the third side 63. The bearing shell 52 further comprises a fourth side 64 opposite to the third side 63, which does not restrict the movement of the bearing cage 54. At the third side 63, at the back of the bearing shell 52, not visible in Fig. 7, a further hook is provided as a fixing means 68 for the half shell bearing 50, to allow a mounting of the half shell bearing 50 within a brake caliper of a disc brake.

The bearing cage 54 has in particular a rectangular form with four corners 70-73. The two corners 70, 71 are located at an end 74 of the bearing cage 54 in the direction of the third side 63 of the bearing shell 52 and the two corners 72, 73 are located at an end 75 of the bearing cage 54 in the direction of the fourth side 64 of the bearing shell 52, wherein at least the two corners 70, 71 of the end 74, located at the third side 63 of the bearing shell 52, are rounded.

In the embodiment of Fig. 7, all four corners 70-73 of the bearing cage 54 are rounded. This has the advantage that a wrong assembly of the bearing cage 54 within the bearing shell 52 is avoided, in the sense of a poka yoke design.

A further embodiment of a half shell bearing 80 according to the invention is depicted in Fig. 8. The half shell bearing 80 comprises a bearing shell 82 and a bearing cage 84, wherein the bearing shell 82 is similar in size and form to the bearing shell 52, or is identical with the bearing shell 52. The bearing cage 84 comprises rolling elements 86, which correspond with the rolling elements 56, or are identical with the rolling elements 56.

The bearing shell 82 comprises in particular limiting shell walls 90 and 91 on opposite sides of the bearing shell 82, to restrict the movement of the bearing cage 84 on a rolling path 88 to one dimension, in a direction perpendicular to a rotation axis of the rolling elements 86.

At a third side 93 of the bearing shell 82, two hooks are arranged as a retaining means 96, 97, defining an end of the rolling path 88, for restricting a movement of the bearing cage 84 in the direction of the third side 93. The bearing shell 82 comprises further a fourth side 94, which does not restrict the movement of the bearing cage 84.

The bearing cage 84 has a rectangular form with four corners 100-103 and is similarly constructed as the bearing cage 54. The two corners 100, 101 are located at an end 104 in the direction of the third side 93 of the bearing shell 82 and the two corners 102, 103 are located at an end 105 in the direction of the fourth side 94 of the bearing shell 82, wherein at least the two corners 100, 101 of the end 104, located at the third side 93 of the bearing shell 82, are chamfered.

In the embodiment of Fig. 8, all four corners 100-103 of the bearing cage 84 are chamfered. This has the advantage that a wrong assembly of the bearing cage 84 within the bearing shell 82 is avoided.

The half shell bearing 80 has the advantage that the bearing cage 84 is smaller at the ends 104 and 105 because of the chamfered corners 100-103. Correspondingly, also the danger that the bearing cage 84 collides with a brake caliper of a disc brake during insertion of the half shell bearing 80 into a clamping unit of the disc brake is reduced.

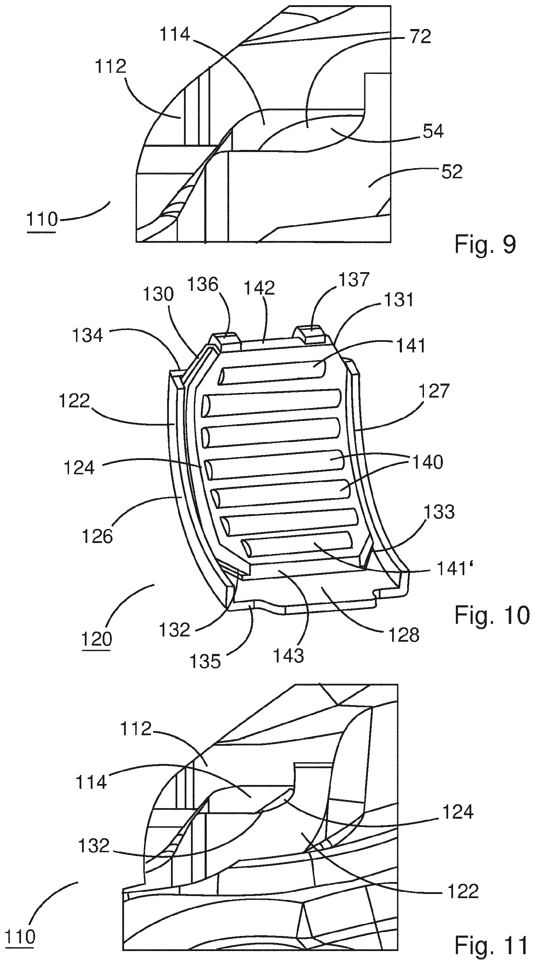

Fig. 9 illustrates a detail of a brake caliper 110 with a clamping unit 112 of an air disc brake in an enlarged view, after the half shell bearing 50 is inserted into the brake caliper 110. Because the size of the bearing cage 54 is reduced at the fourth side 64 of the half shell bearing 50 due to the rounded corners 72, 73, there is an increased space, compared to Fig. 4, between the bearing cage 54 and the brake caliper 110 at a location 114. Therefore, the danger that the bearing cage 54 collides with the brake caliper 110 is reduced.

When the half shell bearing 80 is inserted into the brake caliper 110, correspondingly, also the danger that the bearing cage 84 of the half shell bearing 80 collides with the brake caliper 110 is reduced, because the bearing cage 84 is smaller at the end being directed to the fourth side 94 of the bearing shell 82 due to the chamfered corners 102, 103.

A further embodiment of a half shell bearing 120 according to the invention is depicted in Fig. 10. The half shell bearing 120 comprises a bearing shell 122 and a bearing cage 124, wherein the bearing shell 122 is similar in size and form to the bearing shell 52 or is identical with the bearing shell 52. The bearing shell 122 comprises in particular limiting shell walls 126 and 127 on opposite sides of the bearing shell 122, to restrict the movement of the bearing cage 124 on a rolling path 128 of the bearing shell 122 to one dimension. The bearing cage 124 comprises four corners 130-133, which are chamfered.

At a third side 134 of the bearing shell 122, two hooks are arranged as a retaining means 136, 137, defining an end of the rolling path 128, for restricting a movement of the bearing cage 124 in the direction of the third side 134. The bearing shell 122 comprises further a fourth side 135, which does not restrict the movement of the bearing cage 124.

The bearing cage 124 comprises inner rolling elements 140 and outer rolling elements 141 and 141', which are small in diameter relative to their length. In this embodiment, the outer rolling elements 141, 141' have a length, which is shorter than the length of the inner rolling elements 140. This has the advantage that the four corners 130-133 can be more, stronger chamfered compared to the four corners 100-103 of the bearing cage 84. Therefore, the bearing cage 124 is smaller at ends 142, 143 of the bearing cage 124 compared to the ends 104, 105 of the bearing cage 84.

Fig. 11 illustrates a detail of the brake caliper 110 with the clamping unit 112 in an enlarged view, after the half shell bearing 120 is inserted into the brake caliper 110. Because the size of the bearing cage 124 is further reduced at both ends 142, 143 , compared to the bearing cages 54 and 84, there is in particular more open space, compared to Fig. 4, between the bearing cage 124 and the brake caliper 110 at the location 114, and the danger that the bearing cage 124 collides with the brake caliper 110 is further reduced.

The half shell bearing 120 has the advantage that the width of the bearing cage 124 is even smaller at the end 142 being directed to the third side 134 and at the end 143 being directed to the fourth side 135 of the bearing shell 122 with regard to the bearing cages 54 and 84, and therefore, the danger that the bearing cage 124 collides with the brake caliper 110 during insertion of the half shell bearing 120 into the clamping unit 112 of the brake caliper 110 is further reduced.

Also other embodiments may be utilized by one skilled in the art without departing from the scope of the present invention. The invention resides and the scope of protection is defined in the claims herein after appended.

### List of Reference signs (part of the specification):

- 2: brake caliper
- 4: clamping unit
- 6, 7: half shell bearings
- 10: push rod
- 11: yoke
- 12: adjuster unit
- 14, 15: fixing means
- 20: lever
- 22: pivot axis
- 24: bearing cage
- 26: needle rollers
- 28: bearing shell
- 30: location
- 40: first end
- 42: second end
- 44, 45: limiting walls
- 46: retaining means
- 48: rolling path
- 50: half shell bearing
- 52: bearing shell
- 54: bearing cage
- 56: rolling elements
- 58: rolling path
- 60, 61: shell walls
- 63: third side of bearing shell 52
- 64: fourth side of bearing shell 52
- 66, 67: retaining means
- 68: fixing means
- 70-73: corners of the bearing cage 54
- 74, 75: ends of the bearing cage 54
- 80: half shell bearing
- 82: bearing shell
- 84: bearing cage
- 86: rolling elements
- 88: rolling path
- 90, 91: shell walls
- 93: third side of bearing shell 82
- 94: fourth side of bearing shell 82
- 96, 97: retaining means
- 100-103: corners of the bearing cage 84
- 104, 105: ends of the bearing cage 84
- 110: brake caliper
- 112: clamping unit
- 114: location
- 120: half shell bearing
- 122: bearing shell
- 124: bearing cage
- 126, 127: shell walls
- 128: rolling path
- 130-133: corners of the bearing cage 124
- 134: third side of bearing shell 122
- 135: fourth side of bearing shell 122
- 136, 137: retaining means
- 140: inner rolling elements
- 141, 141': outer rolling elements
- 142, 143: ends of the bearing cage 124

## Claims

1. A half shell bearing (50; 80; 120) comprising a bearing shell (52; 82; 122) and a bearing cage (54; 84; 124), wherein
the bearing shell (52; 82; 122) comprises a surface being designed as a rolling path (58; 88; 128) for the bearing cage (54; 84; 124);
the bearing shell (52; 82; 122) comprises two shell walls (60, 61; 90, 91; 126, 127) on opposite sides of the bearing shell (52; 82; 122), a third side (63; 93; 134) with a retaining means (66, 67; 96, 97; 136, 137) for limiting a movement of the bearing cage (54; 84; 124), and a fourth side (64; 94; 135) opposite to the third side (63; 93; 134);
the bearing cage (54; 84; 124) comprises cylindrical rolling elements (56; 86; 140, 141, 141') that roll on the rolling path (58; 88; 128), wherein the bearing cage (54; 84; 124) is movably arranged on the rolling path (58; 88; 128) within the shell walls (60, 61; 90, 91; 126, 127) of the bearing shell (52; 82; 122); and
the bearing cage (54; 84; 124) comprises two corners (70, 71; 100, 101; 130, 131) at an end (74;104; 142) of the bearing cage (54; 84; 124) being directed to the third side (63; 93; 134) of the bearing shell (52; 82; 122);
**characterized in that**
the two corners (70, 71; 100, 101; 130, 131) of the bearing cage (54; 84; 124) are chamfered.

2. The half shell bearing (50; 80; 120) of claim 1, wherein the rolling path (58; 88; 128) of the bearing shell (52; 82; 122) is constructed as a partially cylindrically curved surface.

3. The half shell bearing (50; 80; 120) of claim 1 or 2, wherein the rolling elements (56; 86; 140, 141, 141') are cylindrical rolling elements having a diameter and a length, wherein the diameter is small relative to the length.

4. The half shell bearing (50; 80; 120) of claim 3, wherein the rolling elements (56; 86; 140, 141, 141') are needle elements.

5. The half shell bearing (50; 80; 120) of one of the preceding claims, wherein the two shell walls (60, 61; 90, 91; 126, 127) of the bearing shell (52; 82; 122) are designed to limit the movement of the bearing cage (54; 84; 124).

6. The half shell bearing (50) of one of the preceding claims, wherein the bearing cage (54) has a rectangular form with four corners (70-73), and wherein all four corners (70-73) are chamfered.

7. The half shell bearing (120) of one of the preceding claims, wherein the bearing cage (124) comprises an outer rolling element (141) being located at an end (142) of the bearing cage (124) being directed to the third side (134) of the bearing shell (122), an outer rolling element (141') being located at an end (143) of the bearing cage (124) being directed to the fourth side (135) of the bearing shell (122) and inner rolling elements (140), and wherein the outer rolling element (141) being located at the end (142) of the bearing cage (124) being directed to the third side (134) has a length, which is shorter than the length of the inner rolling elements (140).

8. The half shell bearing (120) of one of the preceding claims 1 to 6, wherein the bearing cage (124) comprises an outer rolling element (141) being located at an end (142) of the bearing cage (124) being directed to the third side (134) of the bearing shell (122), an outer rolling element (141') being located at an end (143) of the bearing cage (124) being directed to the fourth side (135) of the bearing shell (122) and inner rolling elements (140), and wherein both outer rolling elements (141, 141') have a length, which is shorter than the length of the inner rolling elements (140).

9. The half shell bearing (50; 80; 120) of one of the preceding claims, wherein the fourth side (64; 94; 135) of the bearing shell (52; 82; 122) comprises an open end, which is not limiting a movement of the bearing cage (54; 84; 124).

10. The half shell bearing (50; 80; 120) of one of the preceding claims, wherein the bearing shell (52; 82; 122) comprises a fixing means (68) for mounting the half shell bearing (50; 80; 120) at a brake calliper (110) of a disc brake.

11. A disc brake comprising a brake calliper (110) with a clamping unit (112) and a half shell bearing (50; 80; 120) according to one of the preceding claims.

12. The disc brake of claim 11, wherein the disc brake is an air operated or electromechanically operated sliding calliper disc brake.

13. A utility vehicle comprising a disc brake according to claim 11 or 12.

## Patentansprüche

1. Halbschalenlager (50; 80; 120), umfassend eine Lagerschale (52; 82; 122) und einen Lagerkäfig (54; 84; 124), wobei
die Lagerschale (52; 82; 122) eine Oberfläche aufweist, die als Rollbahn (58; 88; 128) für den Lagerkäfig (54; 84; 124) ausgebildet ist;
die Lagerschale (52; 82; 122) zwei Schalenwände (60, 61; 90, 91; 126, 127) auf gegenüberliegenden Seiten der Lagerschale (52; 82; 122), eine dritte Seite (63; 93; 134) mit einem Haltemittel (66, 67; 96, 97; 136, 137) zum Begrenzen einer Bewegung des Lagerkäfigs (54; 84; 124) und eine vierte Seite (64; 94; 135), die der dritten Seite (63; 93; 134) gegenüberliegt, umfasst;
der Lagerkäfig (54; 84; 124) zylindrische Wälzkörper (56; 86; 140, 141, 141') aufweist, die auf der Rollbahn (58; 88; 128) abrollen, wobei der Lagerkäfig (54; 84; 124) auf der Rollbahn (58; 88; 128) innerhalb der Schalenwände (60, 61; 90, 91; 126, 127) der Lagerschale (52; 82; 122) bewegbar angeordnet ist; und
der Lagerkäfig (54; 84; 124) zwei Ecken (70, 71; 100, 101; 130, 131) an einem Ende (74; 104; 142) des Lagerkäfigs (54; 84; 124) umfasst, die zu der dritten Seite (63; 93; 134) der Lagerschale (52; 82; 122) gerichtet sind;
**dadurch gekennzeichnet, dass**
die zwei Ecken (70, 71; 100, 101; 130, 131) des Lagerkäfigs (54; 84; 124) abgeschrägt sind.

2. Halbschalenlager (50; 80; 120) nach Anspruch 1, wobei die Rollbahn (58; 88; 128) der Lagerschale (52; 82; 122) als teilweise zylindrisch gekrümmte Oberfläche konstruiert ist.

3. Halbschalenlager (50; 80; 120) nach Anspruch 1 oder 2, wobei die Wälzkörper (56; 86; 140, 141, 141') zylindrische Wälzkörper sind, die einen Durchmesser und einer Länge aufweisen, wobei der Durchmesser im Verhältnis zu der Länge klein ist.

4. Halbschalenlager (50; 80; 120) nach Anspruch 3, wobei die Wälzkörper (56; 86; 140, 141, 141') Nadelelemente sind.

5. Halbschalenlager (50; 80; 120) nach einem der vorstehenden Ansprüche, wobei die zwei Schalenwände (60, 61; 90, 91; 126, 127) der Lagerschale (52; 82; 122) gestaltet sind, um die Bewegung des Lagerkäfigs (54; 84; 124) zu begrenzen.

6. Halbschalenlager (50) nach einem der vorstehenden Ansprüche, wobei der Lagerkäfig (54) eine rechteckige Form mit vier Ecken (70-73) aufweist und wobei alle vier Ecken (70-73) abgeschrägt sind.

7. Halbschalenlager (120) nach einem der vorstehenden Ansprüche, wobei der Lagerkäfig (124) einen äußeren Wälzkörper (141), der sich an einem Ende (142) des Lagerkäfigs (124) befindet, das zu der dritten Seite (134) der Lagerschale (122) gerichtet ist, einen äußeren Wälzkörper (141'), der sich an einem Ende (143) des Lagerkäfigs (124) befindet, das zu der vierten Seite (135) der Lagerschale (122) gerichtet ist, und innere Wälzkörper (140) umfasst, und wobei der äußere Wälzkörper (141), der sich an dem Ende (142) des Lagerkäfigs (124) befindet, das zu der dritten Seite (134) gerichtet ist, eine Länge aufweist, die kürzer als die Länge der inneren Wälzkörper (140) ist.

8. Halbschalenlager (120) nach einem der vorstehenden Ansprüche 1 bis 6, wobei der Lagerkäfig (124) einen äußeren Wälzkörper (141), der sich an einem Ende (142) des Lagerkäfigs (124) befindet, das zu der dritten Seite (134) der Lagerschale (122) gerichtet ist, einen äußeren Wälzkörper (141'), der sich an einem Ende (143) des Lagerkäfigs (124) befindet, das zu der vierten Seite (135) der Lagerschale (122) gerichtet ist, und innere Wälzkörpern (140) umfasst, und wobei beide äußeren Wälzkörper (141, 141') eine Länge aufweisen, die kürzer als die Länge der inneren Wälzkörper (140) ist.

9. Halbschalenlager (50; 80; 120) nach einem der vorstehenden Ansprüche, wobei die vierte Seite (64; 94; 135) der Lagerschale (52; 82; 122) ein offenes Ende umfasst, das eine Bewegung des Lagerkäfigs (54; 84; 124) nicht einschränkt.

10. Halbschalenlager (50; 80; 120) nach einem der vorstehenden Ansprüche, wobei die Lagerschale (52; 82; 122) ein Befestigungsmittel (68) zum Montieren des Halbschalenlagers (50; 80; 120) an einem Bremssattel (110) einer Scheibenbremse umfasst.

11. Scheibenbremse umfassend einen Bremssattel (110) mit einer Zuspanneinheit (112) und ein Halbschalenlager (50; 80; 120) nach einem der vorstehenden Ansprüche.

12. Scheibenbremse nach Anspruch 11, wobei die Scheibenbremse eine luftbetriebene oder elektromechanisch betriebene Gleitsattel-Scheibenbremse ist.

13. Nutzfahrzeug, umfassend eine Scheibenbremse nach Anspruch 11 oder 12.

## Revendications

1. Palier à demi-coquille (50 ; 80 ; 120) comprenant une coquille de palier (52 ; 82 ; 122) et une cage de palier (54 ; 84 ; 124), dans lequel
la coquille de palier (52 ; 82 ; 122) comprend une surface étant conçue en guise d'une piste roulante (58 ; 88 ; 128) pour la cage de palier (54 ; 84 ; 124) ;
la coquille de palier (52 ; 82 ; 122) comprend deux parois de coquille (60, 61 ; 90, 91 ; 126, 127) sur les côtés opposés de la coquille de palier (52 ; 82 ; 122), un troisième côté (63 ; 93 ; 134) avec des moyens de retenue (66, 67 ; 96, 97 ; 136, 137) permettant de limiter un mouvement de la cage de palier (54 ; 84 ; 124), et un quatrième côté (64 ; 94 ; 135) opposé au troisième côté (63 ; 93 ; 134) ;
la cage de palier (54 ; 84 ; 124) comprend des éléments roulants cylindriques (56 ; 86 ; 140, 141, 141') qui roulent sur la piste roulante (58 ; 88 ; 128), dans lequel la cage de palier (54 ; 84 ; 124) est agencée de manière mobile sur la piste roulante (58 ; 88 ; 128) au sein des parois de coquille (60, 61 ; 90, 91 ; 126, 127) de la coquille de palier (52 ; 82 ; 122) ; et
la cage de palier (54 ; 84 ; 124) comprend deux
coins (70, 71 ; 100, 101 ; 130, 131) au niveau d'une extrémité (74 ; 104 ; 142) de la cage de palier (54 ; 84 ; 124) étant dirigée vers le troisième côté (63 ; 93 ; 134) de la coquille de palier (52 ; 82 ; 122) ;
**caractérisé en ce que**
les deux coins (70, 71 ; 100, 101 ; 130, 131) de la cage de palier (54 ; 84 ; 124) sont chanfreinés.

2. Palier à demi-coquille (50 ; 80 ; 120) selon la revendication 1, dans lequel la piste roulante (58 ; 88 ; 128) de la coquille de palier (52 ; 82 ; 122) est construite en guise d'une surface partiellement cylindrique et incurvée.

3. Palier à demi-coquille (50 ; 80 ; 120) selon la revendication 1 ou 2, dans lequel les éléments roulants (56 ; 86 ; 140, 141, 141') sont des éléments roulants cylindriques ayant un diamètre et une longueur, dans lequel le diamètre est petit par rapport à la longueur.

4. Palier à demi-coquille (50 ; 80 ; 120) selon la revendication 3, dans lequel les éléments roulants (56 ; 86 ; 140, 141, 141') sont des éléments d'aiguille.

5. Palier à demi-coquille (50 ; 80 ; 120) selon l'une des revendications précédentes, dans lequel les deux parois de coquille (60, 61 ; 90, 91 ; 126, 127) de la coquille de palier (52 ; 82 ; 122) sont conçus pour limiter le mouvement de la cage de palier (54 ; 84 ; 124).

6. Palier à demi-coquille (50) selon l'une des revendications précédentes, dans lequel la cage de palier (54) a une forme rectangulaire avec quatre coins (70-73), et dans lequel les quatre coins (70-73) sont chanfreinés.

7. Palier à demi-coquille (120) selon l'une des revendications précédentes, dans lequel la cage de palier (124) comprend un élément roulant externe (141) étant situé au niveau d'une extrémité (142) de la cage de palier (124) étant dirigée vers le troisième côté (134) de la coquille de palier (122), un élément roulant externe (141') étant situé au niveau d'une extrémité (143) de la cage de palier (124) étant dirigée vers le quatrième côté (135) de la cage de palier (122) et des éléments roulants internes (140), et dans lequel l'élément roulant externe (141) étant situé au niveau de l'extrémité (142) de la cage de palier (124) étant dirigée vers le troisième côté (134) a une longueur, qui est plus courte que la longueur des éléments roulants internes (140).

8. Palier à demi-coquille (120) de l'une des revendications précédentes 1 à 6, dans lequel la cage de palier (124) comprend un élément roulant externe (141) étant situé au niveau d'une extrémité (142) de la cage de palier (124) étant dirigée vers le troisième côté (134) de la coquille de palier (122), un élément roulant externe (141') étant situé au niveau d'une extrémité (143) de la cage de palier (124) étant dirigée vers le quatrième côté (135) de la cage de palier (122) et des éléments roulants internes (140), et dans lequel les éléments roulants externes (141, 141') ont l'un et l'autre une longueur plus petite que la longueur des éléments roulants internes (140).

9. Palier à demi-coquille (50 ; 80 ; 120) selon l'une des revendications précédentes, dans lequel le quatrième côté (64 ; 94 ; 135) de la coquille de palier (52 ; 82 ; 122) comprend une extrémité ouverte, qui ne limite pas un mouvement de la cage de palier (54 ; 84 ; 124).

10. Palier à demi-coquille (50 ; 80 ; 120) selon l'une des revendications précédentes, dans lequel la coquille de palier (52 ; 82 ; 122) comprend des moyens de fixation (68) permettant de monter le palier à demi-coquille (50 ; 80 ; 120) au niveau d'un étrier de frein (110) d'un frein à disque.

11. Frein à disque comprenant un étrier de frein (110) avec une unité de serrage (112) et un palier à demi-coquille (50 ; 80 ; 120) selon l'une des revendications précédentes.

12. Frein à disque selon la revendication 11, dans lequel le frein à disque est un frein à disque à étrier coulissant à commande pneumatique ou à commande électromécanique.

13. Véhicule utilitaire comprenant un frein à disque selon la revendication 11 ou 12.
